# EUROPEAN PATENT APPLICATION

(11) **EP 0 754 410 A1**
(43) Date of publication of application: **22.01.1997**
(21) Application number: 96305285.7
(22) Date of filing: 18.07.1996
(51) Int. Cl.: A23L 1/162

(54) **Process for producing an instant pasta**

(30) Priority: 21.07.1995 GB 9515018
(71) Applicant: DALGETY PLC, London W1H 5RH (GB)
(72) Inventor: Wilkinson, Andrew Keith, Ely, Cambridgeshire CB6 1BL (GB); Wotherspoon, Colin, Ousden, Newmarket, Suffolk CB8 8TX (GB)
(74) Representative: Sheard, Andrew Gregory

(57) **Abstract**

A process for producing an instant noodle (or similar pasta product) comprises the steps of either (i) providing a dough having a developable protein (e.g. gluten) concentration of at least about 9% (for example, at least about 10%, e.g. at least about 11%) w/w (with respect to the total wet weight of the dough) or (ii) supplementing a dough with developable protein (e.g. with gluten); and then extruding the dough; wherein the instant noodle (or similar pasta product) is at least partially cooked post-extrusion and/or the dough is also supplemented with starch. The process may comprise steps of supplementing a dough mix with developable protein (and optionally also supplementing it with starch); developing (e.g. by working) the dough mix to form a dough; extruding the dough to form an extruded noodle (or similar pasta product); at least partially gelatinizing starch in the extruded product; and then dehydrating the gelatinized product. The dough may be produced by working (e.g. mechanically working) a mixture comprising flour and water to an extent sufficient to produce substantial developable protein (e.g. gluten) development.

## Description

The present invention relates to processes for the production of extruded instant pasta products, and in particular to processes for the production of extruded instant (especially fried) loose noodles. The invention also relates to pasta products produced by the processes of the invention, and in particular to instant loose fried noodles having a reduced fat/oil content.

Current methods for producing instant noodles involve the steps of kneading a dough, rolling the dough to produce a sheet and then slitting the sheet into ribbons. The dough ribbons are ultimately formed into blocks (or nests) of noodles ready for frying and subsequent packaging.

Noodle blocks prepared by such methods can give rise to packaging difficulties when used in certain products, in that the block shapes may not fit easily into different pack forms. This problem is presently tackled by kibbling the noodle blocks to produce loose instant noodles, which are far easier to handle and package. However, kibbling is inefficient and wasteful.

There is therefore a need for a method of producing loose instant noodles which avoids the problems associated with kibbling.

When addressing this need, those skilled in the art are faced with the problem that the quality of a pasta product depends to a large extent on the mouthfeel or texture of the product after cooking (or rehydration, in the case of instant pasta products). In most cases, the ultimate aim is to produce pasta, pasta-type products or noodles having a texture which produces an elastic chewiness in the mouth. Pasta or noodles etc. in such a state are said to exhibit an "al dente" mouthfeel.

However, the creation of an "al dente" texture depends to a large extent on the degree and pattern of gelatinization of the pasta during cooking. Since gelatinization is extremely sensitive to the physical and chemical properties of the pasta, relatively small changes in the physicochemical properties of the pasta can have a dramatic influence on cooking properties. Thus, changes in the nature of the process steps employed or in the formulation of the starting materials can seriously impair the quality of a pasta product.

Notwithstanding these problems, methods of producing loose instant noodles have been developed which involve extrusion rather than rolling and slitting to produce the desired noodle shape. Such methods are therefore suitable for the production of loose noodles, since the extruded noodle string can be cut to any desired length, width or shape during emergence from the extruder die or after.

However, extrusion-based methods suffer from several disadvantages. These disadvantages stem from the fact that the process of extrusion results in physicochemical degradation of the dough and/or the imposition of physical characteristics (such as a compressed inner core or damaged gluten structure) which renders subsequent rehydration difficult. This can prevent the creation of the desired "al dente" texture. Thus, such methods are not generally suitable for the production of instant pasta products for which rapid rehydration is essential.

The deleterious effects of extrusion on the texture and rehydration characteristics of pasta products have been to some extent mitigated by the use of profiled dies which impart grooves or slits to the extrudate (see US 5,332,592). However, noodles produced by this method require elaborate post-extrusion steaming-hydration-steaming steps to ensure complete starch gelatinization throughout the compressed central core of the extrudate.

A further problem associated with known processes for the production of instant noodles arises from the inclusion of a frying step, which is commonly used to remove water following steam treatment and to complete the cooking process. During frying, water in the noodles is flashed off - this dries and further cooks them and also imparts a porous structure which facilitates later rehydration. However, the noodles also absorb a considerable quantity of oil during the frying step, which produces an undesirable increase in calorie content and a propensity for rancid off-flavour development during storage (thus limiting shelf life).

The present invention seeks to provide a method for producing extruded instant loose noodles which avoids or reduces the aforementioned problems. The invention further seeks to provide an instant extruded loose noodle product which is comparable in quality to kibbled sheet-derived noodles. The present invention preferably seeks to provide an instant loose fried noodle having a reduced fat/oil content.

According to the present invention, there is provided a process for producing an instant noodle (or similar pasta product) comprising the steps of: (a) either (i) providing a dough having a developable protein (e.g. gluten) concentration of at least about 9% (for example, at least about 10%, e.g. at least about 11%) w/w (with respect to the total wet weight of the dough) or (ii) supplementing a dough with developable protein (e.g. with gluten); and then (b) extruding the dough, wherein the instant noodle (or similar pasta product) is at least partially cooked post-extrusion and/or the dough is also supplemented with starch.

It has now been found that the aforementioned problems associated with the use of extruders in the production of instant noodles can be reduced or eliminated by extruding dough having levels of developable protein (e.g. gluten) which are high enough to maintain the physical integrity of the dough during extrusion. It has also been found that further benefits can be obtained through the use of starch (e.g. tapioca) supplements.

Moreover, where a frying step is incorporated into the process, it has also surprisingly been found that the invention permits the production of an extrudate which absorbs significantly less oil during frying. The processes of the present invention are therefore suitable for the production of reduced fat instant loose noodles.

Preferably, the dough is supplemented with both gluten and starch.

As used herein, the term "instant noodle" is intended to refer to noodles which can be hydrated to an edible and palatable state within 10 minutes. Preferably, the instant noodles of the invention can be hydrated to a texture giving an "al dente" mouthfeel within 10 minutes. Particularly preferred instant noodles of the invention can be hydrated to an edible (e.g. "al dente") state within 5 minutes (for example, in 3 to 5 minutes). In each case, the instant noodles of the invention are preferably hydratable by soaking in hot water (at e.g. 90-100 degrees centigrade). Thus, unlike conventional noodles (which require cooking in very hot liquid for 10 to 20 minutes before serving), the instant noodles of the invention are substantially precooked.

As used herein, the term "noodle" is intended to encompass all products made from doughs which are primarily flour (for example wheat flour) and water, to which adjuvants such as eggs, salt and other spices may be added. The noodles of the invention therefore include Japanese-style "Udon" noodles, noodles in ribbon or string form and noodles of the type most commonly found in dehydrated instant meals. Similar pasta products include macaroni, spaghetti, vermicelli and other pastas irrespective of shape.

As used herein, the term "dough" is intended to encompass all mixtures comprised substantially of flour and water which have been subjected to a degree of development (e.g. chemical development or mechanical working) sufficient to result in a well-developed protein (e.g. gluten) matrix.

The physical structure (or texture) of the doughs of the invention is not critical to the invention, and varies according to the developable protein (e.g. gluten) and starch levels present (however achieved).

In general, the doughs used in the present invention have a texture which is quite different to that of the loose wet crumb which is fed to extruders or pasta presses in conventional processes. The doughs of the present invention are typically worked at relatively high work input levels to produce a more developed protein (e.g. gluten) matrix, and this usually results in the production of a plastic (usually elastic), kneadable dough mass.

In the absence of supplemental starch, the dough typically assumes the form of a continuous kneadable lump of dough. When starch is used as a supplement, the dough typically assumes the form of a kneadable (though relatively dry and often discrete) collection of dough lumps (i.e. a "crumbly dough" is produced).

As used herein, the term "mild conditions", when applied to the extrusion step, means that the extrusion parameters are such that the pasta is formed in a substantially uncooked state. Thus, under such conditions the dough is not subjected to temperatures and/or pressures sufficient to cook it to a significant extent (i.e. the extrusion parameters are such that thermosetting of the protein (e.g. gluten) and/or starch gelatinization is substantially avoided).

Thus, the instant pasta products of the invention are preferably subjected to post-extrusion cooking step(s).

As used herein and unless otherwise indicated, the term "supplemented" means that the relevant ingredient is added separately to the dough. Thus, in the case where the invention involves both developable protein (e.g. gluten) and starch supplements, these ingredients are preferably added (in the form of crude, semi-pure or purified preparations from any suitable source) to the flour/water dough mix, reliance not being wholly placed on endogenous developable protein and/or starch naturally present in the flour used to make the dough.

However, it should be noted that the use of developable protein in the present invention does not necessarily involve the addition of protein supplements in the sense defined above. Where particularly strong flours (or modified flours) are used for making the dough, it is possible to dispense with the addition of a separate developable protein supplement and instead rely on the relatively high levels of endogenous protein (e.g. gluten) present in the flour, providing that these endogenous levels are sufficient to maintain the physical integrity of the dough during subsequent extrusion.

In such embodiments, the process is characterized by the provision of a dough having a developable protein (e.g. gluten) concentration of at least about 9% (for example at least about 10%, e.g. at least about 11%) w/w (with respect to the total wet weight of the dough). This can be achieved inter alia by adjusting the protein level of a starting flour by any suitable method (e.g. by supplementing with gluten or other developable proteins, such as egg proteins) or simply by the selection of a particularly strong flour rich in endogenous gluten (for example from specially-bred wheat varieties produced by conventional breeding or through the use of recombinant DNA technology or other suitable methods).

It should therefore be understood that the addition of separate developable protein (e.g. gluten) supplements can be dispensed with in cases where the total endogenous concentration exceeds a critical threshold level (about 9% (for example 10%, e.g. 11%) wt with respect to the total wet weight of the dough).

Addition of an exogenous starch supplement, for example tapioca or potato starch, could be replaced by endogenous wheat starch through selection of wheat varieties with an appropriate starch content. Such wheat varieties may be produced by conventional breeding, or through the use of recombinant DNA technologies, or any other suitable method.

Without wishing to be bound by any theory, it is thought that the developable protein functions to maintain the physical integrity of the dough during extrusion, while the starch (when present) functions as a texture modifier (possibly by absorbing water within the pasta matrix and so promoting more extensive gelatinization during later rehydration).

The process of the invention preferably comprises the steps of: (a) supplementing a dough mix with developable protein (and optionally also supplementing it with starch); (b) developing (e.g. by working) the dough mix to form a dough; (c) extruding the dough to form an extruded noodle (or similar pasta product); (d) at least partially gelatinizing starch in the extruded product; and then (e) dehydrating the gelatinized product.

In preferred embodiments, the dough is extruded under mild conditions such that a noodle (or similar pasta product) is formed in a substantially uncooked state. In such embodiments, mechanical working in the extruder does not cook the pasta product (i.e. thermoset the developable protein and/or gelatinize the starch), the cooking step being carried out post-extrusion.

The preferred step of at least partially gelatinizing the starch in the extruded product preferably comprises the step of steaming the extruded product. Steaming causes inter alia at least partial gelatinization (also known as alpha-conversion) when water penetrates the polymeric structure of starch granules in the product to induce swelling.

The duration and temperature of the steaming step is selected according to the type of pasta product, its shape, intended use and the texture required. Preferably, the steaming step comprises steaming for 5 to 15 minutes (e.g. about 10 minutes), typically at 100-110 (e.g. 105) degrees centigrade.

Preferably, the steaming step is a continuous (rather than a batch) process. The steaming step may also comprise the additional step of spraying with and/or immersion in water before, during or after steaming. Thus, the steaming step may itself be a multistage process.

The preferred step of dehydrating the gelatinized product preferably comprises the step of frying (e.g. flash frying) the gelatinized product. During frying, water in the product is flashed off, thereby drying it and imparting a porous structure which facilitates later rehydration.

Preferably, the frying step is conducted at 150-180 (e.g. about 165) degrees centigrade for 30-90 seconds (for example 55-60 seconds, e.g. about 60 seconds). The frying step may advantageously be conducted in palm oil, although any other suitable commercially available frying oil normally composed, for example, of blends of soya, rapeseed, corn, palm oil etc. may be used.

As an alternative to a frying step, the gelatinized product may be dehydrated by drying (e.g. in a pasta dryer) or by microwave heating. Drying by these methods avoids the problems associated with the retention of oil in the pasta product, and is preferred in circumstances where the calorie content of the final product is to be kept as low as possible.

The dough is preferably extruded through a die orifice profiled to impart a desired shape to the pasta product during extrusion. The geometry of the die orifice is selected according to the type of pasta product and the composition of the dough, since the ultimate shape of the pasta product (and in particular the ratio of its surface area to its volume) is an important determinant of its rehydration characteristics. Those skilled in the art can readily determine appropriate die geometries.

For producing noodles, the die is preferably shaped so as to produce thin ribbons or strings of extruded dough. Particularly preferred for use in the present invention (especially for the production of noodles) is a die having a scrolled slit. The width of the slit is preferably 0.5 to 1.5 mm (for example 0.6 to 0.8 mm. e.g. 0.7 mm), while the length is preferably about 50 to 100 mm (e.g. about 65 mm). The extrudate from such a die orifice therefore takes the form of a corrugated sheet.

This sheet is preferably cut into narrow strips (e.g. about 2-4 mm wide) during emergence from the die (for example, by use of a rotating blade arranged to sweep periodically across the die orifice). In this way, a continuous succession of discrete folded pasta ribbons (each of 50 to 100 mm, e.g. 65 mm in length) suitable for use as loose noodles can be produced.

Depending on the particular geometry of the die orifice, it may be necessary to employ a perforated backing plate and/or tapered slits to prevent distortion under pressure (which can foul the cutting blades).

Any of a wide variety of suitable extruders (single/twin screw etc.) may be used according to the invention, either as part of an integrated pasta forming apparatus or as a separate element thereof. Those skilled in the art will be readily able to make an appropriate choice of extruder, as well as to select and establish suitable running conditions (including for example pressure, temperature, residence time and feed rate settings).

Examples of suitable extruders include pasta (screw) presses. Particularly good results have been obtained with the Pavan press, modified to allow direct feeding of the dough to the forming screw, with a screw speed of about 20 r.p.m. at 75 Kg/cm² head pressure.

Preferably, the amount of water in the dough is within the range 30% to 50% by weight w.r.t. flour. Particularly preferred is the use of water within the range 36% to 44% by weight w.r.t. flour (for example 38% to 42%, e.g. about 40% w.r.t. flour).

The developable protein is preferably added to 2-10% (for example, 3-7%, e.g. 3-4%) w.r.t. flour. The amount added depends on the strength (i.e. protein, principally gluten, content) of the flour. Strong flours containing about 11-12% wt gluten are usually supplemented with 3-4% wt gluten. Weak flours require more gluten - typically about 6% wt or more gluten is added in these cases.

Where used, starch is preferably also added to 2-10% (for example, 3-7%, e.g. 3-4%) w.r.t. flour.

The gluten is preferably wheat gluten (for example purified wheat gluten, e.g. Cerestar vital wheat gluten).

The starch, where used, may be potato or (particularly preferred) tapioca starch (e.g. Avebe Perfectamyl). Tapioca starch has been found to be a particularly effective texture modifier for use in the present invention. Alternatively, the wheat source can be selected (or engineered) to have the desired level of starch content, or starch characteristics for example to mimic tapioca starch.

All of the above percentage values are expressed with respect to the flour in its moist state, when it typically contains 13-14% by weight water.

Preferably, the dough for use in the invention is produced by mechanical working to an extent sufficient to produce substantial gluten development.

The dough is preferably worked in a dough mixer. Suitable dough mixers for use in the processes of the invention include the Strahmann continuous dough mixer and the Hobart 400 batch mixer. The dough mixer is advantageously equipped with a work input meter, so that the level of work input to the dough can be monitored and accurately maintained.

Particularly preferred are work input levels sufficient to produce a continuous protein (e.g. gluten) matrix - usually, the dough is worked to levels typical in bread-making. The levels of work applied in the present invention are therefore considerably higher than those used in conventional pasta forming methods, when the flour/water mixture is typically worked to produce a wet crumb.

In preferred embodiments, the work input level is 5-20 Whr/Kg (for example 8-13 Whr/Kg, e.g. about 11 Whr/Kg). However, those skilled in the art will be readily able to determine the optimum work input (which varies according to the pasta product being produced and the particular ingredients used). Too high a work level tends to produce pastas which become too soft after hydration, while underworked doughs yield friable products which disintegrate into a pulp and exhibit a "short" texture.

The dough may comprise a strong flour (e.g. a flour having about 11-12% gluten). However, the type of flour chosen depends on the pasta product being produced: for example, durum semolina is used for pastas such as spaghetti.

The invention also covers a process for producing an instant food product, comprising the steps of: (a) producing an instant pasta product (e.g. a noodle) according to the process of the invention and then (b) mixing the product with other food components (e.g. spices, herbs, textured protein etc.) to produce an instant food product.

Also embraced by the invention are the products (for example instant noodles) obtainable by the processes of the invention.

The invention will now be described in greater detail by way of example. The examples are for illustrative purposes only and are not intended to be limiting in any way.

### Example 1: Preparation of instant fried noodles using a gluten supplement alone

15.0 Kg Spillers Milling Vienna Spring flour (moisture 13-14%)
0.525 Kg Cerestar wheat gluten
5.5 1 cold water, containing the following dissolved within:
0.25 Kg salt
2.5 g potassium carbonate
0.12 g sodium carbonate

The above ingredients are mixed in a Hobart mixer with a gate paddle to a work level of 11.2 Whr/Kg. The dough is then pressed (with a screw speed of 20 r.p.m.) using a prewarmed die plate having 6 inserts each with a 0.7 mm scrolled slit. After about 15 minutes, and after the die head pressure has stabilized at about 115 Kg/cm², the noodles are cut to the appropriate width, collected and steamed for 10 minutes at about 105 degrees centigrade in a Hobart batch steamer. They are then immediately fried at 165 degrees centigrade for 50 seconds in fresh palm oil.

### Example 2: Preparation of instant fried noodles using both gluten and starch supplements

The process described in Example 1 was repeated except that the following ingredients were used:
14.5 Kg Spillers Milling Vienna Spring flour (moisture 13-14%)
0.525 Kg Cerestar wheat gluten
0.5 Kg tapioca (Avebe Perfectamyl T10X)
5.7 1 cold water, containing the following dissolved within:
0.25 Kg salt
2.5 g potassium carbonate
0.12 g sodium carbonate.

The instant fried noodles were found to have an improved texture on hydration as compared to the noodles prepared in Example 1. However, in both of the above Examples, the noodles produced were comparable in quality to those produced by the conventional slitted sheet process.

The noodles produced in both Examples 1 and 2 were fully hydratable to an "al dente" texture in four minutes in hot (90-100 degrees centigrade) water.

### Example 3: Effect of tapioca on noodle texture

The process described in Example 2 was repeated, except that three different relative levels of tapioca, flour and water were used, viz.: (1) 1 Kg tapioca, 14 Kg flour and 5.6 l water; (2) 2 Kg tapioca, 13 Kg flour and 5.8 l water; (3) 3 Kg tapioca, 12 Kg flour and 6.0 l water.

It was found that the increased levels of water were necessary to maintain a reasonable die head pressure: as the level of tapioca increased, so the doughs became more crumbly.

Tapioca additions at all three levels improved the softness and evenness of texture, yet the noodles were chewy and had a bite similar to conventional kibbled slitted-sheet noodles. Tapioca at the 2 Kg level appeared to produce the best results of the three levels used here.

Subsequent work has shown that significantly lower concentrations of tapioca can give good results.

### Example 4: Effect of die geometry

The process of Example 1 was repeated, except that a die slit width of 0.8 mm was used. Noodles having a firmer texture were produced.

### Example 5: Effect of die geometry

The process of Example 1 was repeated, except that a die slit width of 0.6 mm was used. Noodles having a pleasant, soft texture were produced. However, they became too soft after about 5 minutes hydration in hot water.

### Example 6: Effect of steaming conditions

The process of Example 5 was repeated, except that the steaming time was reduced to 6 and 9 minutes. The reduction in steaming time slowed the rate at which the noodles became soft during hydration.

### Example 7: Effect of water level

The process of Example 2 was repeated, except that the amount of water was varied. The following levels of water were used: (1) 5.5 l; (2) 5.6 l; (3) 5.8 l; (4) 5.9 l. The noodles were steamed for either 8 or 10 minutes.

The best results were obtained with 5.8 1 and 5.9 1 of water and 10 minutes steaming time.

### Example 8: Effect of work level

15 Kg Spillers Milling Vienna Spring flour (moisture 13.5%)
0.525 Kg Cerestar wheat gluten
0.5 Kg tapioca (Avebe Perfectamyl T10X)
5.7 1 cold water, containing the following dissolved within:
0.25 Kg salt
2.5 g potassium carbonate
0.12 g sodium carbonate.

The above ingredients are mixed in a Hobart mixer with a gate paddle to work levels of: (1) 13.1 Whr/Kg and (2) 15.9 Whr/Kg. The dough is then pressed (with a screw speed at 20 r.p.m.) using a prewarmed die plate having six die inserts each having a 0.7 mm scrolled slit.

After about 15 minutes, and after the die head pressure has stabilized at about 115 Kg/cm², the noodles are cut to the appropriate width, collected and steamed for 10 minutes at about 105 degrees centigrade in a Hobart batch steamer. They are then immediately fried at 165 degrees centigrade for 50 seconds in fresh palm oil.

The resulting noodles were of a similar quality to those produced in Example 2, except that they became soft slightly more rapidly during hydration.

### Example 9: Fat analysis

Noodles were prepared according to the process described in Example 2 (except that a die slit width of 0.8 mm was used) and ground to a coarse powder using a pestle and mortar. A sample (1.00 g) was weighed into a powder jar and methanol (10 ml) added. The mixture was homogenized (1 minute, red setting) in an Ultra-Turrax homogenizer. Chloroform (20 ml) was then added and the mixture further homogenized for 1 minute.

The homogenate was filtered into a measuring cylinder and the sediment rinsed with chloroform/methanol 2:1 to give a final supernatant volume of 60 ml. The supernatant was then washed with 15 ml 0.88% potassium chloride (aq) in a separating funnel.

The lower organic layer was collected into a measuring cylinder and 1/4 the volume of methanol/0.88% KCl (1:1) added. After vigorous shaking in a separating funnel the organic layer was filtered and dried over sodium sulphate (10g) into a round bottomed flask. The sodium sulphate was rinsed with a few ml chloroform/methanol 2:1, and the mixings combined.

Most of the solvent was removed by vapourization at 30 degrees centigrade, and the remaining solvent and residue transferred to a pre-weighed flask. The solvent was removed under a stream of nitrogen to leave a constant mass of lipid.

The average total lipid content (over four replicates) was 14.0% w/w. The lipid content of the conventional slitted sheet noodles is typically about 25% w/w.

Thus, the noodles of the present invention have a significantly reduced lipid content relative to conventional fried noodles.

Similar results were observed for noodles prepared according to the process described in Example 1 (i.e. without tapioca).

## Claims

1. A process for producing an instant noodle (or similar pasta product) comprising the steps of:
(a) either (i) providing a dough having a developable protein (e.g. gluten) concentration of at least about 9% (for example, at least about 10%, e.g. at least about 11%) w/w (with respect to the total wet weight of the dough) or (ii) supplementing a dough with developable protein (e.g. with gluten); and then extruding the dough preferably the dough is extruded under mild conditions (e.g. under non-cooking conditions)
wherein the instant noodle (or similar pasta product) is at least partially cooked post-extrusion and/or the dough is also supplemented with starch and optionally further comprising the step of cutting the dough during or after extrusion.

2. The process of claim 1 comprising the steps of:
(a) supplementing a dough mix with developable protein and optionally also supplementing it with starch;
(b) developing (e.g. by working) the dough mix to form a dough;
(c) extruding the dough to form an extruded noodle (or similar pasta product);
(d) at least partially gelatinizing starch in the extruded product; and then
(e) dehydrating the gelatinized product.

3. The process of claim 2 wherein step (c) comprises the step of steaming the extruded product, the steaming step optionally comprising the step of steaming for 5 to 15 minutes (e.g. about 10 minutes) at e.g. about 105 degrees centigrade and optionally wherein the steaming step further comprises the step of spraying the product with water (and/or immersing the product in water) before, during or after steaming.

4. The process of claim 2 or claim 3 wherein step (d) comprises the step of frying the gelatinized product and preferably the frying is in palm oil and optionally wherein, the frying step is conducted at 150-180 (e.g. about 165) degrees centigrade for 30-90 seconds (for example 55-60 seconds, e.g. about 60 seconds).

5. The process of any one of the preceding claims wherein the dough is extruded through a die orifice profiled to impart a desired shape to the pasta product, wherein optionally either: (i) the die is profiled so as to produce thin ribbons or strings of extruded dough; or (ii) the die orifice is a scrolled slit and the product is e.g. a noodle; optionally wherein, the width of the slit is 0.5 to 1.5 mm (for example 0.6 to 0.8 mm, e.g. 0.7 mm) and the length of the slit is about 50 mm to 100 mm (e.g. about 65 mm).

6. The process of any one of the preceding claims wherein the amount of water in the dough is within the range 30% to 50% by weight w.r.t. flour, and optionally wherein, the amount of water is within the range 36% to 44% by weight w.r.t. flour (for example 38% to 42%, e.g. about 40% w.r.t. flour).

7. The process of any one of the preceding claims wherein the dough is produced by working (e.g. mechanically working) a mixture comprising flour and water to an extent sufficient to produce substantial developable protein (e.g. gluten) development, and optionally wherein, the mixture is worked to an extent sufficient to produce a continuous protein (e.g. gluten) matrix and/or the mixture is worked to levels typical in bread-making; preferably wherein, the work input level is 5-20 Whr/Kg (for example 8-13 Whr/Kg, e.g. about 11 Whr/Kg).

8. The process according to any one of the preceding claims wherein developable protein (e.g. gluten) and/or starch are each added to 2-10% (for example, 3-7%, e.g. 3-4%) w.r.t. flour and/or one or more of the following: (i) the developable protein is wheat gluten (for example purified wheat gluten, e.g. Cerestar vital wheat gluten); (ii the starch is potato or tapioca starch (e.g. Avebe Perfectamyl); (iii) the dough comprises a strong flour (e.g. a flour containing about 11-12% gluten) or a flour selected from semolina, durum flour or farina flour.

9. A process for producing an instant food product for human or animal (e.g. pet) consumption, comprising the steps of:
(a) producing an instant noodle (or similar pasta product) according to the process of any one of the preceding claims;
(b) mixing the noodle with other food components (e.g. spices, herbs, textured protein etc.) to produce an instant food product.

10. An instant noodle (or similar pasta product) or other food product obtainable by the process of any one of claims 1 to 9.

11. An instant loose fried extruded noodle (or similar pasta product) containing a developable protein (e.g. gluten) supplement, or containing both developable protein (e.g. gluten) and starch (e.g. tapioca) supplements.
